# EUROPÄISCHE PATENTSCHRIFT

(11) **EP 1 542 540 B1**
(45) Veröffentlichungstag und Bekanntmachung des Hinweises auf die Patenterteilung: **23.05.2007**
(21) Anmeldenummer: 03712067.2
(22) Anmeldetag: 20.03.2003
(51) Int. Cl.: A22C 9/00

(54) **VORRICHTUNG ZUM PLÄTTEN VON LEBENSMITTELN, INSBESONDERE FLEISCHSTÜCKEN**
DEVICE FOR FLATTENING FOODSTUFFS, IN PARTICULAR PIECES OF MEAT
PROCEDE D'APLATISSEMENT DE DENREES ALIMENTAIRES, EN PARTICULIER DE MORCEAUX DE VIANDE

(30) Priorität: 22.03.2002 DE 10212881
(43) Veröffentlichungstag der Anmeldung: 22.06.2005
(73) Patentinhaber: Marel HF., 210 Gardabaer (IS)
(72) Erfinder: Völkl, Thomas, 83052 Bruckmühl (DE)
(74) Vertreter: Hardarson, Gunnar Örn
(86) Internationale Anmeldenummer: PCT/EP2003/002941
(87) Internationale Veröffentlichungsnummer: WO 2003/079800

(56) Entgegenhaltungen:
- EP-A- 0 743 007
- WO-A-01/76376
- US-A- 3 234 589
- US-A- 4 467 497

## Beschreibung

Die Erfindung betrifft eine Vorrichtung zum Plätten von Lebensmitteln, insbesondere eine Vorrichtung zum Plätten von Fleischstücken nach dem Oberbegriff des Anspruches 1.

Eine gattungsbildende Vorrichtung ist aus der WO 01/76376 A1 bekannt geworden. Diese vorbekannte Plättvorrichtung umfasst eine Fördereinrichtung, worüber die zu plättenden Fleischstücke einer Plättzone zuführbar sind. Im Bereich der Plättzone sind rotierende Rollen oder Walzen vorgesehen, die auf das jeweilige Fleischstück einwirken. Eine wesentliche Verbesserung gegenüber herkömmlichen Vorrichtungen, insbesondere zum Plätten von Fleischstücken wird dadurch realisiert, dass Rollen oder Walzen verwendet werden, die im Bereich der Plättzone gegenüber dem zu plättenden Fleischstück über dieses hinweg relativ verfahrbar angeordnet sind.

Ausgehend von diesem gattungsbildenden Stand der Technik ist es Aufgabe der Erfindung eine nochmals verbesserte Plättvorrichtung zu schaffen, die einfach aufgebaut ist und dabei zumindest vergleichbar gute Ergebnisse bezüglich der zu plättenden Fleischstücke ermöglicht.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Erfindungsgemäß hat sich nunmehr gezeigt, dass auf die im Stand der Technik vorgesehene Vielzahl von Klopfrollen oder Ausrollwalzen verzichtet werden kann. Denn diese Walzen und Rollen haben im Stand der Technik eine nicht unerhebliche Vibration der gesamten Anlage zur Folge gehabt. Zudem war der gesamte Aufbau der Vorrichtung nicht unerheblich, da alle erwähnten Rollen und Walzen entsprechend gelagert werden mussten. Darüber hinaus lassen sich mit der erfindungsgemäßen Vorrichtung sogar noch bessere Ergebnisse erzielen als bei gattungsbildenden Stand der Technik.

Erfindungsgemäß ist demgegenüber nunmehr vorgesehen, dass auf diese über das Fleischstück hinweg verfahrbaren Rollen oder Walzen verzichtet werden kann. Es wird anstelle dessen lediglich eine Klopftrommel verwendet, die eine von einer glatten Zylinderfläche abweichende Oberflächenstruktur aufweist. Bevorzugt wird eine Oberflächenstruktur mit verschiedenen Erhebungen und Vertiefungen oder sogar Ausnehmungen verwendet. Diese Klopftrommel kann dabei so in Rotation versetzt werden, dass der Zylindermantel mit einer von der Vorschubgeschwindigkeit des Fleisches abweichenden Umlaufgeschwindigkeit relativ zu den zu behandelnden Fleischstücken bewegt wird, wobei durch die vorgesehenen Erhebungen und Vertiefungen die gewünschte Plättwirkung realisiert wird. Dabei ist es erfindungsgemäß unerheblich, ob die erfindungsgemäße Klopftrommel so angetrieben wird, dass ihr umlaufender Walzenmantel sich in Förderrichtung oder entgegengesetzt zur Förderrichtung bewegt. Die Rotationsgeschwindigkeit soll nur so gewählt werden, dass die Umfangsgeschwindigkeit des Mantels der Klopftrommel eine zu der Vorschubbewegung der zu behandelnden Fleischstücke unterschiedliche Geschwindigkeit aufweist, so dass eine Relativgeschwindigkeit zwischen Umfangsbewegung des Walzentrommelmantels und der Vorschubbewegung der Fleischstücke festzustellen ist. Dadurch ist gewährleistet, dass die Erhebungen auf dem Walzentrommelmantel über das Fleisch hinweg bewegt werden, wobei die bevorzugt wulstartigen Erhebungen aufgrund der zeit- und abschnittsweise und damit schubweise auftretenden höheren Druckbelastung auf das Fleisch einwirken und dadurch den hohen gleichmäßigen Plätteffekt erzeugen.

In einer besonders bevorzugten Ausführungsform können dabei die Erhebungen am Walzenmantel jeweils eine mehr oder weniger quer zur Umfangsrichtung verlaufende wulstartige Struktur aufweisen.

In einer besonders bevorzugten Ausführungsform weisen die Erhebungen eine Querschnittsstruktur auf, die eher einer Trapezform angenähert ist.

Die axiale Länge der Erhebungen auf dem Walzenmantel ist so gewählt, dass sie sich über die gesamte axiale Breite der Klopftrommel erstreckt oder zumindest in einem solchen ausreichenden Maß erstreckt, dass die zu behandelnden Fleischstücke möglichst in ihrer gesamten Breite entsprechend behandelt werden können.

In vielen Fälle erweist es sich als sehr günstig, wenn die Erhebungen schräg zur Förderrichtung für die zu plättenden Lebensmittel bzw. schräg zur Umlaufrichtung der Förderbänder für die in der Regel zu plättenden Fleischscheiben ausgerichtet sind, wobei die schräge Grundausrichtung von der einen bis zur anderen Seite der Klopftrommel oder Fördereinrichtung reichen kann.

Als besonders günstig hat sich herausgestellt, wenn die in Rede stehenden Erhebungen, die in Umfangsrichtung auf die Walzenmanteltrommel versetzt angeordnet sind, sich in einem wulstartigen Streifen zumindest abschnittsweise quer zur Umfangsrichtung erstrecken, und zwar symmetrisch zu einer senkrecht zur Rotationsachse stehenden Ebene, vorzugsweise einer mittleren Symmetrieebene. Mit anderen Worten werden die wulstartigen Erhebungen bevorzugt in Draufsicht zumindest nach Art einer weit gespreizten V-Struktur angenähert gebildet.

Eine verbesserte Plättvorrichtung ergibt sich auch durch eine erfindungsgemäß vorgesehene Klopfeinrichtung. Diese kann die gewünschte Verdünnung der Lebensmittel bewirken in Zusammenarbeit mit einer der vorstehend erläuterten Umsetzungen einer Plättvorrichtung mit umlaufender Fördereinrichtung oder Plätttrommel.

Weitere Vorteile, Einzelheiten und Merkmale der Erfindung ergeben sich nachfolgend aus dem anhand von Zeichnungen dargestellten Ausführungsbeispiel, wobei zum weiteren Offenbarungsgehalt, dem Aufbau und der Funktionsweise vor allem auf die eingangs zitierte WO 01/076376 A1 Bezug genommen wird, die zum Inhalt der vorliegenden Anmeldung gemacht wird. Dabei zeigen im einzelnen:
- Figur 1 :: eine schematische Seitenansicht der erfindungsgemäßen Vorrichtung;
- Figur 2 :: eine schematische Frontseitenansicht (Beschickungsseite) der Vorrichtung;
- Figur 3 :: eine Seitenansicht bei abgenommener vorderer Seitenwand;
- Figur 4 :: eine schematische perspektivische Darstellung einer erfindungsgemäßen Klopftrommel;
- Figur 5 :: eine schematische Querschnittsdarstellung durch eine in Figur 4 wiedergegebene Erhebung;
- Figur 6 :: eine weitere perspektivische schematische Darstellung einer abgewandelten Klopftrommel;
- Figur 7 :: eine ausschnittsweise Draufsicht auf einen abgewickelten Mantel bezüglich einer alternativ gestalteten Klopftrommel;
- Figur 8 :: eine schematische Draufsicht auf eine Mantelabwicklung für ein abgewandeltes Ausführungsbeispiel einer Klopftrommel, bei welcher die Erhebungen 55 in Schrägstellung vorgesehen sind;
- Figur 9 :: ein schematisches abgewandeltes Ausführungsbeispiel in Seitenansicht, bei welchem die Plättvorrichtung eine andere Fördereinrichtung für die Erhebungen und Vertiefungen anstelle der in den vorausgegangenen Ausführungsbeispielen gezeigten Plätttrommel zeigt;
- Figur 10 :: eine schematische Seitenansicht zur Erläuterung einer Höhenverstellung bzw. Abstandseinstellung in der Plättzone;
- Figur 11 :: eine Plättvorrichtung umfassend eine Klopfeinrichtung; und
- Figur 12 :: eine Abwandlung zu Figur 11 mit einer abweichenden Klopfeinrichtung.

Die erläuterte Plättvorrichtung ist bevorzugt als verfahrbare Einheit mit Fest- und Lenkrädern 1, 3 ausgestattet.

Die Plättvorrichtung umfasst ein im gezeigten Ausführungsbeispiel mit zwei frontseitigen Türen 5 versehenes Gehäuse 7 und mit einer oben liegenden Gehäuseabdeckung 9.

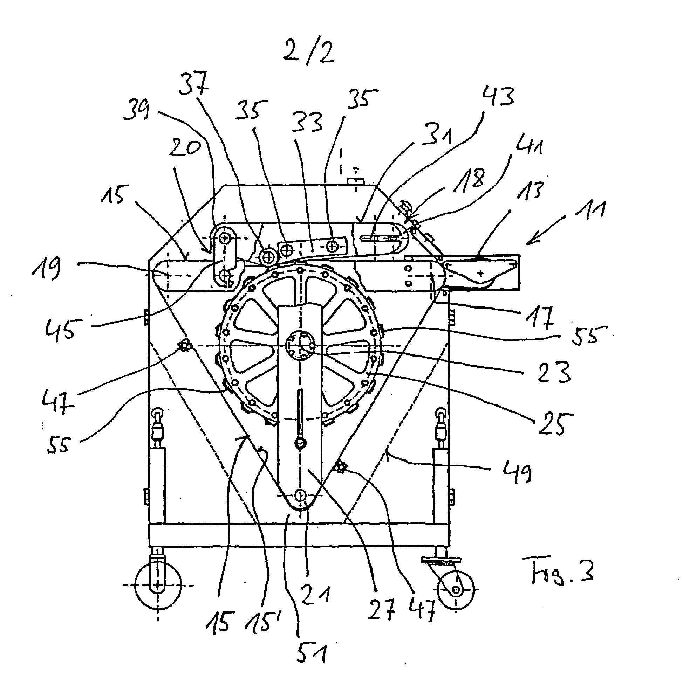

Wie insbesondere in der einen Blick in das Innere freigebenden schematischen Darstellung gemäß Figur 3 ersichtlich ist, umfasst die Plättvorrichtung einen Einlauf 11 mit einem separaten umlaufenden Einlaufband 13.

Als zentrale Fördereinrichtung ist ein Förderband 15 vorgesehen, welches von einer Umlenkstelle 17 (die durch eine in der Zeichnung nicht näher wiedergegebene Umlaufwalze gebildet wird) in zumindest annähernd horizontaler Transportrichtung zu einer abgabenseitigen Umlenkstelle 19 und von dort zu einer unten liegenden Umlenkstelle 21 und darüber wieder zu der eingangsseitigen Umlenkstelle 17 umlaufend geführt ist. Damit ergibt sich in Seitenansicht gemäß Figur 3 eine Förderstrecke für das Förderband 15, welche grob als dreieckförmig bezeichnet werden kann.

Innerhalb dieses Förderbandes 15 ist eine um eine Drehachse 23 Plätteinrichtung 25 angeordnet, die nachfolgend in einem Ausführungsbeispiel teilweise auch als Klopftrommel 25' bezeichnet wird, die über Seitenwangen 27 gehalten wird, an der die Achse 59 der Klopftrommel gelagert ist. Auch wenn nachfolgend häufig von Klopftrommel gesprochen wird, so muss es nicht zwangsläufig heißen, dass über die Klopftrommel direkt oder mittelbar Klopfbewegungen zusätzlich auf die zu plättenden Fleischstücke ausgeübt werden. Dies ist zwar bevorzugt so gewünscht, indem eine zusätzliche Klopfeinrichtung in geeigneter Weise integriert vorgesehen ist. Es wird insoweit allerdings auf von Klopftrommel deswegen gesprochen, weil sie ähnlich einem Fleischklopfer allein durch die Press- und Vorschubbewegung den gewünschten Plättvorgang bewirkt. Allgemein wird unter Klopftrommel insoweit auch eine Plätttrommel verstanden.

Mit dem Förderband 15 wirkt ein Gegenband 31 zusammen, welches oberhalb des Förderbandes 15 zwischen der Einlaufseite 18 und der Freigabeseite 20 umlaufend angeordnet ist. Dabei läuft das Gegenband 31 an einer oben liegenden Gegenplatte 33 entlang, die bezogen auf die Klopftrommel 25 leicht konkav gestaltet ist. Darüber wird das Gegenband 31 einer konkaven Bahn bezogen auf die Klopftrommel 25' tangential an die Klopftrommel 25' herangeführt. Die Gegenplatte wird dabei über zwei Wellen 35 gehalten und justiert.

Im Bereich der Gegenrolle 37 hat das Gegenband 31 bezogen auf die Klopftrommel 25' den tiefsten Punkt erreicht und steigt von dort wieder leicht zu einer ausgangsseitig liegenden Umlenkrolle 39 an, von wo es etwa horizontal zu einer eingangsseitigen Umlenkrolle 41 geführt ist, um von dort wieder in Richtung Gegenplatte 33 zu verlaufen. Im gezeigten Ausführungsbeispiel ist dabei die eingangsseitige Umlenkrolle 41 mittels einer entsprechenden Spann- und Führungseinrichtung 43 axial so verschiebbar, dass das Gegenband 31 immer entsprechend gespannt werden kann.

Das Gegenband ist höhenverstellbar. Dadurch wird die Plättdicke eingestellt. Denkbar ist aber auch, dass die Trommel verstellt wird. Genauso ist es möglich, dass nicht das Gegenband selbst höhenverstellbar ist, sondern dass bei dem unmittelbar in Anlage zu dem zu plättenden Fleischstück umlaufenden Abschnitt des Förderbandes auf der zum Fleischstück gegenüberliegenden rückwärtigen Seite eine Gegendruckplatte vorgesehen ist, die lediglich höhenverstellbar ist. Darüber wird auch die entsprechende Abstützung der durch die Plättvorrichtung auf die Fleischscheiben einwirkenden Kräfte aufgenommen.

Um das Gegenband 31 leicht auszubauen, zu wechseln und gegebenenfalls auch besser reinigen zu können, ist die eine Stirnseite der ausgangsseitigen Umlenkrolle 39 mit einem verschwenkbaren Arretierhebel 45 abgestützt und gesichert.

Wie schließlich auch noch zu ersehen ist, sind im gezeigten Ausführungsbeispiel in Umlaufrichtung des Förderbandes 15 versetzt liegend noch an zwei Stellen Abstreifer 47 angeordnet, die jeweils mit der Oberseite 15' des Förderbandes 15 wechselwirken, auf der die Fleischstücke zwischen Einlauf- und Abgabeseite aufgelegt werden. Fleischreste können dabei nach unten hin frei abfallen und werden durch eine ebenfalls in Seitenansicht etwa V-förmige Auffangeinrichtung 49 einer unteren Sammelstelle 51 weitergegeben.

Dadurch ergibt sich letztlich von der Einlauf- zur Auslaufseite eine Förderstrecke 14, die wie bei anderen vorbekannten Plättvorrichtungen auch von der Einlauf- zur Auslaufseite einen zunehmend geringeren Vertikalquerschnitt aufweist.

Nachfolgend wird die innerhalb der dreieckförmig geführten Förderstrecke des unteren Förderbandes angeordnete Klopftrommel 25' näher erörtert, die anhand von Figur 4 in einer ersten schematischen perspektivischen Darstellung wiedergegeben ist.

Wie aus dieser Darstellung gemäß Figur 4 zu ersehen ist, weist die Klopftrommel 25' einen Zylindermantel 53 auf, der in Umfangsrichtung versetzt liegend eine Vielzahl von Erhebungen 55 und demgegenüber Vertiefungen 57 aufweist. Anstelle der Vertiefungen 57 kann der Zylindermantel 53 aber auch mit Ausnehmungen oder Durchbrechungen versehen sein.

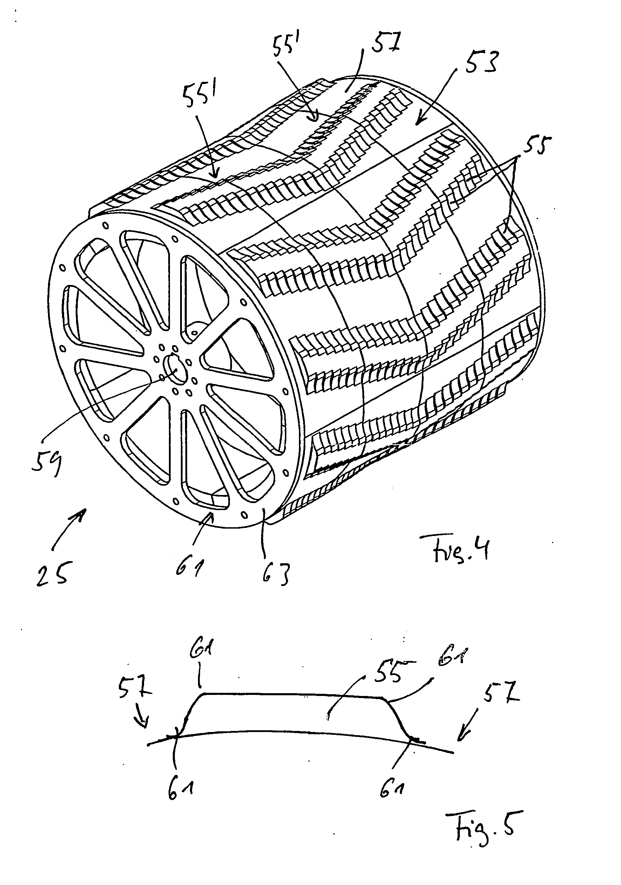

Gemäß der Seitendarstellung nach Figur 5 weisen die Erhebungen in einer Querschnittsdarstellung senkrecht zur Achse 59 der Klopftrommel 25' eine Form auf, die zumindest näherungsweise einer Trapezform angenähert ist. Anstelle der beim Trapez üblicherweise vorgesehenen Ecken sind hier bevorzugt entsprechend konkave oder konvexe Abrundungen 61 vorgesehen.

Die anhand von Figur 5 ersichtlichen Erhebungen können auch als wulstartig oder ähnlich bezeichnet werden. Sie erstrecken sich im wesentlichen über die Breite der Klopftrommel 25' bzw. des Zylindermantels 53. Sie können exakt parallel zur Achse 59 der Klopftrommel 25' verlaufend angeordnet werden. Sie müssen aber nicht zwingend exakt senkrecht zu einer vertikalen Symmetrieebene ausgerichtet sein, die senkrecht durch die Mitte der Achse 59 der Klopftrommel 25' gelegt ist. Denn diese sich quer zur Umlaufrichtung erstreckenden Erhebungen 55 oder wulstartigen Erhebungen 55 können auch zu einer vertikalen Mittelsymmetrieebene winklig ausgerichtet sein, also schräg verlaufen. Bevorzugt wird eine Ausführungsform entsprechend Figur 5 verwendet, bei der die wulstartigen Erhebungen 55 quer zur Umfangsrichtung der Klopftrommel 25' zwar schräg oder zumindest leicht schräg verlaufen, dabei aber symmetrisch zu einer mittleren Vertikalsymmetrieebene angeordnet sind. Dadurch ergibt sich in Draufsicht eine leicht V- oder dachförmige Struktur. Dies bietet Vorteile, wenn nämlich das Fleisch im mittleren Bereich der Trommel bearbeitet wird und dabei die beiden Fleischhälften mit den gegensinnig winklig verlaufenden Hälften 55' der wulstartigen Erhebungen 55 zusammenwirken. Dadurch wirken Kräfte auf das Fleisch ein, die das Fleisch nach links und rechts, d.h. also mit einer gewissen Querkomponente zur gerade durch die Vorrichtung hindurch verlaufenden Förderrichtung druckbelasten. Somit wird durch die leicht schräg aufgestellten Hälften 55' der wulstartigen Erhebungen 55 demgegenüber sichergestellt, dass das Fleisch bei dem Pressvorgang nicht nur in Förderrichtung unter einer Vergrößerung plattgedrückt wird, sondern vor allem auch in Seitenrichtung, also in Axialrichtung der Achse 59. Denn durch die leicht V-förmigen Hälften 55' der Erhebungen 55 ergibt sich insoweit auch ein mit axialer Komponente auf das Fleisch einwirkender Streckvektor.

Bevorzugt wird die Trommel 25' so angetrieben, dass sie sich mit ihrem Umfangsmantel schneller dreht als die Vorschubgeschwindigkeit des Fleisches in der Förderstrecke, d.h. schneller vorwärts bewegt als das untere und obere Förderband 15, 31. Genauso kann die Trommel aber auch so angetrieben werden, dass sich ihre Umfangsgeschwindigkeit des Zylindermantels 53 mit geringerer Umfangsgeschwindigkeit bewegt als die beiden Förderbänder 15, 31. Wichtig ist lediglich, dass sich eine Relativgeschwindigkeit zwischen der Mantelumfangsgeschwindigkeit und der Vorschubbewegung des Fleisches ergibt, damit nämlich die erwähnten Erhebungen 55 jeweils abwechselnd mit den nachfolgenden Vertiefungen über das Fleisch hinweg bewegt werden und durch diese über das Fleisch hinweg bewegte erhöhte Krafteinwirkung der optimale Plättungsvorgang hervorgerufen und unterstützt wird.

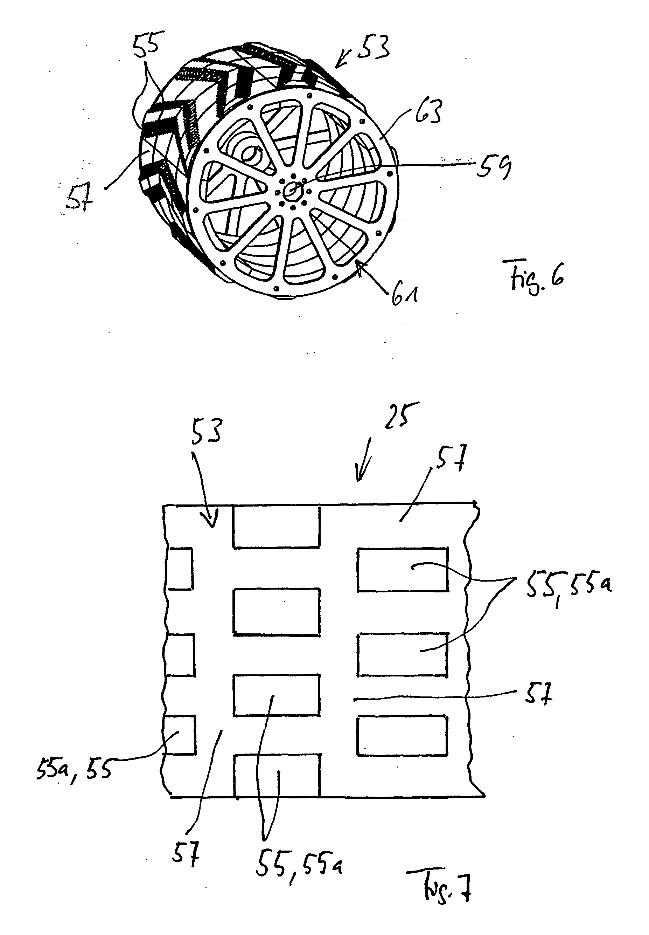

Bei dem Ausführungsbeispiel gemäß Figur 5 sind die einzelnen wulst-, rippen-, wall- oder stegartigen oder -ähnlichen Erhebungen 55 in Umfangsrichtung in gleichen äquidistanten Abständen längs des Zylindermantels 53 angeordnet, vorgesehen oder ausgebildet. Bei dem Ausführungsbeispiel gemäß der vereinfachten perspektivischen Darstellung nach Figur 6 können beispielsweise die entsprechenden Erhebungen 55 auch jeweils paarweise zusammengefasst sein, so dass zwei Erhebungen jeweils einen kleineren Abstand 65 in Umfangsrichtung einnehmen und jeweils zwischen einem derartigen Paar von Erhebungen 55 ein größerer Abstand 67 vorgesehen ist.

Schließlich wird angemerkt, dass bei der schematischen auszugsweise Manteldraufsicht gemäß der Darstellung nach Figur 7 die in den vorausgegangenen Ausführungsbeispielen zu wulstartigen zusammenhängenden Erhebungen auch in eine Vielzahl von Einzelerhebungen 55a aufgespaltet sein können, die nach einem regelmäßigen oder unregelmäßigen Muster nicht nur in Umfangsrichtung, sondern auch in Querrichtung, also in Axialrichtung des Zylindermantels versetzt liegend ausgebildet oder vorgesehen sind. Dabei kann jede Einzelerhebung 55a wieder die unterschiedlichsten Formen, Querschnittformen etc. aufweisen, beispielsweise eine Querschnittsform vergleichbar jener nach Figur 5 aber auch dazu abweichend. Es ist dabei nicht zwingend erforderlich, dass die obere Begrenzungsebene oder Linie der Erhebungen 55 oder der Einzelerhebungen 55' mehr oder weniger platt, eben oder nur leicht konvex ausgebildet sind. Es sind hier beliebige andere Formen oder Erhebungen möglich.

Bei dem erläuterten Ausführungsbeispiel ist bevorzugt ein in Umfangsrichtung geschlossener Zylindermantel vorgesehen, auf dem die Erhebungen 55 ausgebildet sind. Der Zylindermantel 53 einschließlich der Erhebungen kann dabei bevorzugt aus Kunststoff oder auch aus Metall bestehen und z.B. Beschichtungen aus Teflon oder dergleichen aufweisen. Wie bereits erwähnt können aber auch insbesondere die Vertiefungen und Abschnitte zwischen den Erhebungen aus Leerräumen und Durchbrüchen bestehen, also aus offenen Bereichen, so dass in Umfangsrichtung kein geschlossener Zylindermantel vorliegt.

Im gezeigten Ausführungsbeispiel umfasst die Trommel 25' zwei Stirnräder 61, die längs ihrer Achse 59 beabstandet sind. Am Außenumfang 63 dieser in Axialrichtung versetzt liegenden Stirnräder 61 ist dann der Zylindermantel 53 befestigt. Dabei ist im gezeigten Ausführungsbeispiel der Zylindermantel 53 jeweils aus vier Zylindermantel-Scheiben gebildet, die in Axialrichtung zusammengefügt werden. Dadurch lassen sich leichter unterschiedliche Muster mit den Erhebungen und Vertiefungen zusammenfügen.

Schließlich wird auch noch angemerkt, dass sich die erläuterte Klopftrommel 25' mit ihren Erhebungen oder radial vorstehenden Wülsten 55 unter einem entsprechenden Förderband 50 mit von der Fördergeschwindigkeit des Förderbandes 15 abweichender Mantelumlaufgeschwindigkeit hinweg bewegt, also nicht direkt in Kontakt mit den Fleischstücken tritt. Dabei soll der Kontakt zwischen den Erhebungen oder Wülsten 55 und der Umlaufbandunterseite 15' des unteren Laufbandes 15 möglichst reibungsarm sein.

Abweichend vom gezeigten Ausführungsbeispiel kann natürlich die Trommel auch an der Oberseite vorgesehen sein und mit dem oberen umlaufenden Förderband und den darunter befindlichen Fleischscheiben zusammenwirken. Schließlich können auch zwei Klopftrommeln verwendet werden, nämlich eine oben und eine unten liegende, die in doppelter Weise auf die Lebensmittel einwirken.

Abweichend zu dem gezeigten Ausführungsbeispiel kann die Klopftrommel auch in Draufsicht mit ihrer Achse in einem Winkel von 0° bis 180° so verdreht angeordnet werden, dass beispielsweise die Umlaufrichtung der Klopftrommel winklig zur Förderrichtung des Fleisches liegt. Auf jeden Fall kann sogar die Umlaufrichtung senkrecht zur Förderrichtung des Fleisches angeordnet werden.

Der Vollständigkeit halber wird auch angemerkt, dass die Drehrichtung hinsichtlich der Ausführungsbeispiele nach Figur 4 und 6 nicht zwangsläufig in Richtung der V-förmigen Spitze erfolgen muss, sondern auch gegensinnig durchgeführt werden kann.

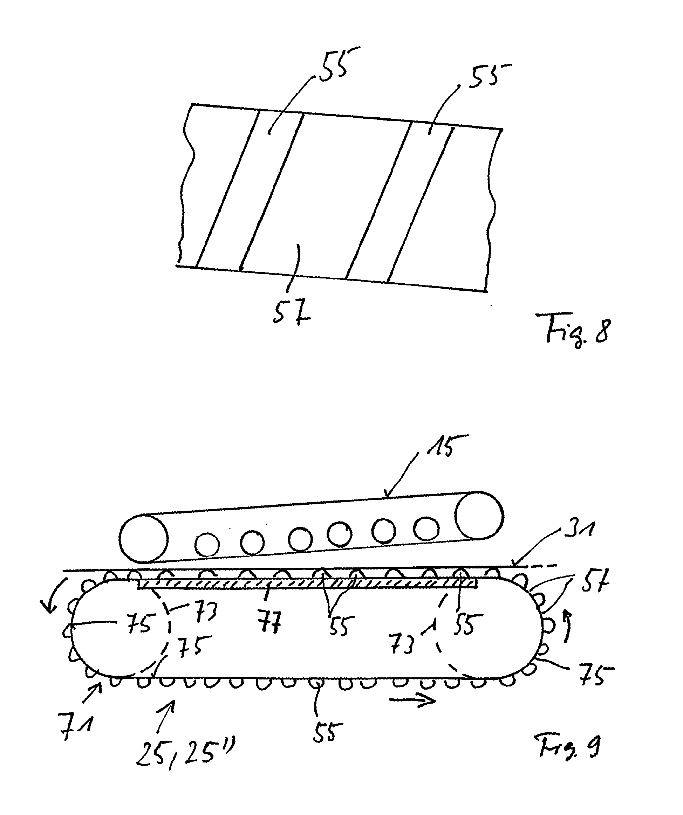

Anhand von Figur 8 ist ferner gezeigt, dass die Wülste und Erhebungen nicht nur V-förmig wie bei dem Ausführungsbeispiel gemäß Figuren 5 und 6, sondern bevorzugt auch schräg zur Achse der Trommel von links nach rechts gerade durchlaufend oder in beliebiger bogen- oder sonstiger Form, aber insgesamt eher schräg angeordnet sein können.

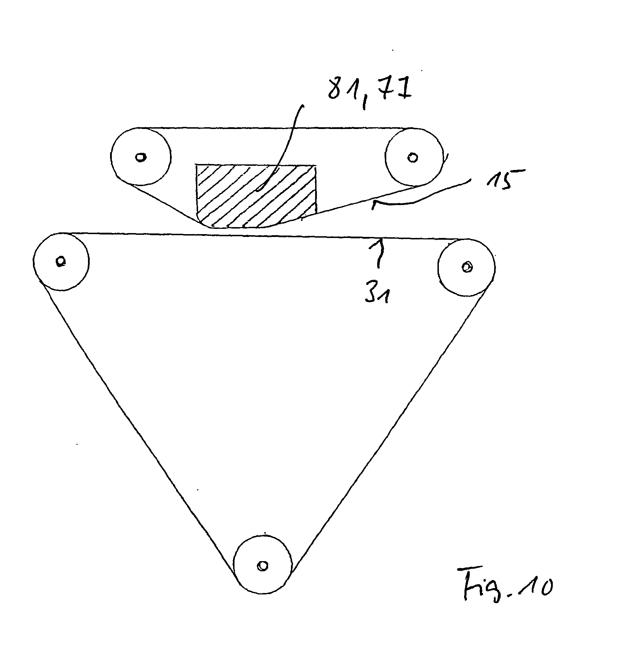

Anhand von Figur 9 ist ein weiteres Ausführungsbeispiel gezeigt, welches eine Abwandlung zum Ausführungsbeispiel gemäß Figur 3 wiedergibt.

Anstelle einer Klopf- oder Plätttrommel 25' ist hier allgemein eine Plättvorrichtung mit spezieller Förder- oder Umlaufeinrichtung 25" verwendet worden, bei der die Wülste und Erhebungen nicht auf dem Außenmantel einer Trommel angeordnet sind, sondern über eine Führungseinrichtung umlaufend vorwärts bewegt werden. Dazu umfasst die Fördereinrichtung 75 beispielsweise eine vordere und hintere Umlenktrommel 73, um welche umlaufend in Vorwärts- oder Gegenrichtung und Hin- und Herbewegung ein Antriebsstrang 75 bewegt wird, auf welchem in Abständen Erhebungen 55 ausgebildet sind, die sich bevorzugt mit Querkomponente quer zur Förder- und Umlaufrichtung erstrecken. Zwischen den Erhebungen 55 sind die Vertiefungen 57 gebildet. Bevorzugt im Bearbeitungs- und Plättabschnitt ist auf der Unterseite dieser Erhebung 55 eine Abstützeinrichtung 77 vorgesehen, damit der notwendige Anpressdruck über die Erhebung 55 auf das in dem Förderkanal vorwärts bewegten zu plättenden Lebensmittel ausgeübt werden kann.

Oberhalb des Förderkanals ist dann eine entsprechende Fördereinrichtung vergleichbar dem Ausführungsbeispiel gemäß Figur 3 vorgesehen, die eine Vielzahl von Rollen umfassen, um welche umlaufend das obere Förderband umläuft.

Die Erhebungen 55 können vergleichbar dem Ausführungsbeispiel gemäß Figur 4, 5,6 oder 7 ausgebildet sein, senkrecht zur Umlaufbewegung des Antriebsstranges 75 ausgebildet sein oder schräg dazu verlaufen, ebenfalls in Draufsicht leicht V-förmig gestaltet sein. Alle möglichen Gestaltungsformen sind ebenso realisierbar.

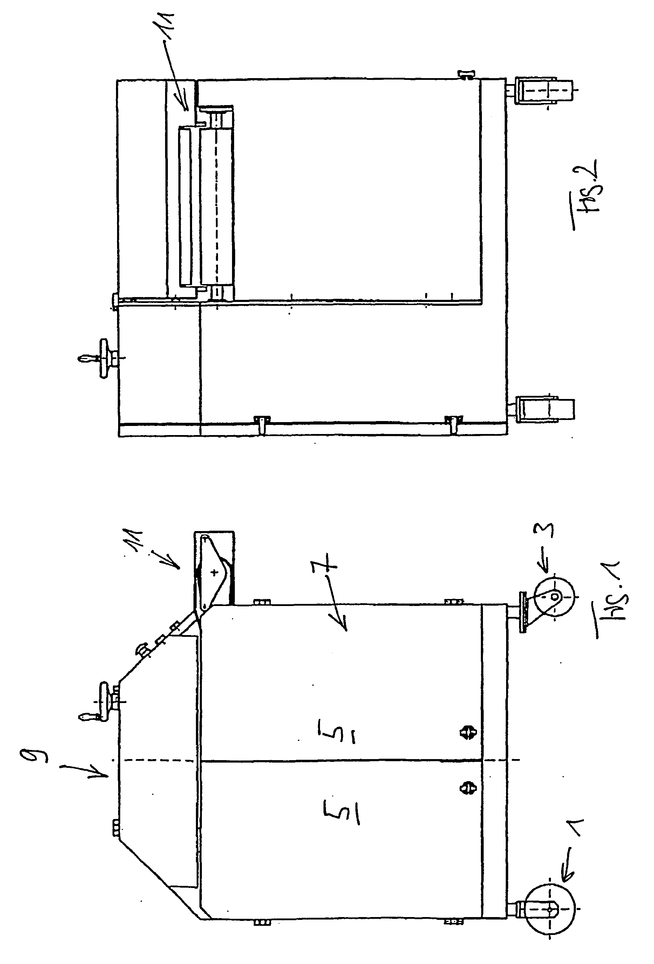

In einer nochmals vereinfachten Ausführungsform könnten noch weniger Erhebungen 55 oder im Extremfall nur eine einzige Erhebung 55 vorgesehen sein, die hinsichtlich der Behandlungszone für das zu plättende Lebensmittel hin- und herbewegt wird, um die entsprechenden Fleischstücke zu plätten. Auch bei diesem Ausführungsbeispiel - wie bei den Ausführungsbeispielen gemäß den Figur 1 bis 7 - könnte durch eine permanente Klopfeinrichtung, die auf die Fördereinrichtung, die Klopftrommel insgesamt einwirkt oder durch die jeweils auf die Unterseite der Erhebung Schläge ausgeübt werden, die den Plättvorgang noch weiter unterstützten oder bewirken.

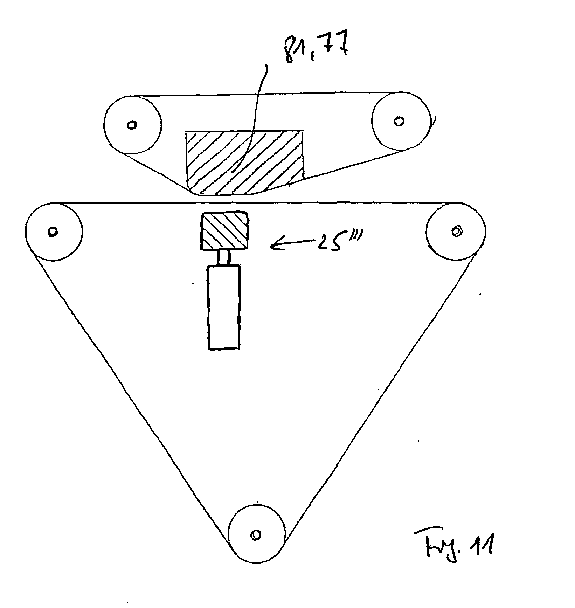

Anhand von Figur 10 ist ferner gezeigt, wie das obere Förderband 15 gegenüber dem unteren Förderband 31 verstellt werden kann. Dazu ist nämlich nicht eine Höhenverstellung des oberen Förderbandes 15 insgesamt notwendig, sondern es ist ausreichend, wenn eine Gegendruckplatte 81 in ihrer Höhe verstellt wird, um dadurch den Abstand in der eigentlichen Plättzone zwischen dem oberen und dem unteren Förderband entsprechend einzustellen. Die unterhalb des unteren Förderbandes 31 vorgesehene Plättvorrichtung ist in diesem Ausführungsbeispiel gemäß Figur 10 der Einfachheit halber nicht dargestellt.

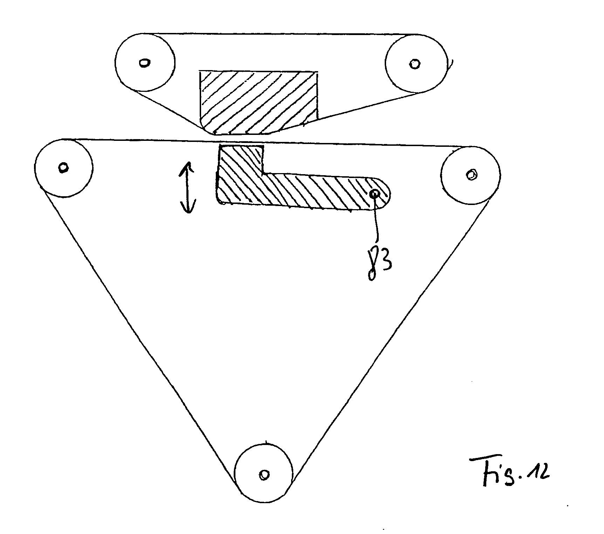

Anhand von Figur 11 ist weiterhin gezeigt, dass die Plättvorrichtung auch eine Klopfeinrichtung 25"' umfassen oder aus dieser bestehen kann. Sie wird nur vertikal auf- und abbewegt, in Richtung der Plättzone. Beispielsweise durch einen Kolben oder Hydraulikkolben.

In Figur 12 ist abweichend gezeigt, dass die Klopfeinrichtung 25" auch um eine Achse 83 rotieren und dabei hammerartig ausgebildet sein kann. Über einen quer zur Zeichenebene verlaufenden nach Art einer Erhebung 55 gebildeten Kopf können Permanentschlagbewegungen von unten her in Richtung Plättzone ausgeübt werden, um darüber die Verdünnung der Lebensmittel zu bewirken. Eine derartige Klopfeinrichtung kann entsprechend - wie erläutert oder auch in Abwandlungen - bei den Plättvorrichtungen 25, 25' 25" gemäß der Ausführungsbeispiele 1 bis 9 ergänzend vorgesehen sein.

## Patentansprüche

1. Plättvorrichtung zum Plätten von Lebensmitteln, insbesondere von Fleischstücken unter flächenmäßiger Vergrößerung bei gleichzeitiger Dickenabnahme mit folgenden Merkmalen
- es ist eine Förder- und/oder Behandlungsstrecke vorgesehen, worüber die zu plättierenden Lebensmittel einer Plättzone zuführbar sind,
- im Bereich der Plättzone ist eine Plättvorrichtung (25, 25', 25") angeordnet, die mit den zu plättenden Lebensmitteln zur Bewirkung der Dickenabnahme zusammenwirkt,
**gekennzeichnet durch** die folgenden weiteren Merkmale
- die Plättvorrichtung (25, 25', 25") weist eine Oberflächenstruktur auf,
- die Oberflächenstruktur der Plättvorrichtung (25, 25', 25") weist in Umlaufrichtung zumindest eine bzw. mehrere versetzt zueinander angeordnete Erhebungen (55) und daneben zumindest jeweils eine Vertiefungen (57), vorzugsweise mehrere Vertiefungen (57) auf,
- die Plättvorrichtung (25,25', 25") wirkt in der Plättzone auf die zu behandelnden Lebensmittel mit ihrer Oberflächenstruktur ein,
- die Plättvorrichtung (25, 25', 25") wird mit einer Geschwindigkeit und/oder Umlaufrichtung angetrieben, derart, dass die Mantelgeschwindigkeit oder Umlaufgeschwindigkeit der zumindest einen Erhebung (55) und/oder die Umlaufrichtung von der Fördergeschwindigkeit und/oder der Förderrichtung des zu verdünnenden Lebensmittels abweicht.

2. Plättvorrichtung nach Anspruch 1, **dadurch gekennzeichnet, dass** die Plättvorrichtung (25, 25', 25") aus einer Plätt- oder Klopftrommel (25') besteht, dass die Plätt- oder Klopftrommel (25') eine von der glatten Zylinderfläche abweichende Oberflächenstruktur aufweist, wobei die Oberflächenstruktur des Zylindermantels (53) der Klopf- oder Plätttrommel (25') eine in Umfangsrichtung quer dazu versetzt liegende Erhebung (55) und Vertiefung (57) aufweist.

3. Plättvorrichtung nach Anspruch 1, **dadurch gekennzeichnet, dass** die Plättvorrichtung (25, 25', 25") einen Antriebsstrang (75), vorzugsweise einen umlaufenden Antriebsstrang oder einen hin- und herbewegbaren Antriebsstrang (75) aufweist, an welchem zumindest einer, vorzugsweise in Umfangsrichtung mehrere versetzt liegende Erhebungen (55) mit daneben oder dazwischen befindlichen Vertiefungen oder Ausnehmungen (57) vorgesehen ist.

4. Plättvorrichtung nach einem der Ansprüche 1 bis 3, **dadurch gekennzeichnet, dass** unterhalb des umlaufenden oder hin- und herbewegbaren Antriebstranges (75) auf der zu den Erhebungen gegenüberliegenden Seite eine Abstützeinrichtung (77) zur Vermeidung einer Ausweichbewegung der Erhebung (55) vorgesehen ist.

5. Plättvorrichtung nach einem der Ansprüche 1 bis 4, **dadurch gekennzeichnet, dass** eine Klopfeinrichtung (25"') vorgesehen ist, die bevorzugt getaktete Klopfbewegungen in Richtung Plättzone für das zu plättende Lebensmittel ausübt, vorzugsweise zumindest mittelbar auf die zumindest eine Erhebung (55), um hierüber die zu plättenden Lebensmittel zusätzlich druckzubeaufschlagen.

6. Plättvorrichtung nach Anspruch 1 bis 5, **dadurch gekennzeichnet, dass** sich die Erhebungen (55) im wesentlichen mit einer Komponente quer zur Umlaufrichtung über den Zylindermantel (53) hinweg erstrecken.

7. Plättvorrichtung nach Anspruch 1 oder 6, **dadurch gekennzeichnet, dass** in Umfangsrichtung mehrere versetzt zueinander liegende Erhebungen (55) vorgesehen sind, die sich im wesentlichen quer zur Umlaufrichtung auf den Zylindermantel (53) erstrecken.

8. Plättvorrichtung nach einem der Ansprüche 1 bis 7, **dadurch gekennzeichnet, dass** sich die Erhebungen (55) wulst-, rippen-, wall- oder stegartig oder im wesentlichen mit konvexer Erhebung teilzylinderförmig quer zur Umlaufrichtung der Klopftrommel (25') erstrecken.

9. Plättvorrichtung nach einem der Ansprüche 1 bis 8, **dadurch gekennzeichnet, dass** die Erhebungen (55) in Querschnittsdarstellung senkrecht zur Rotationsachse (59) der Klopftrommel (25') zumindest einer Trapezform angenähert sind.

10. Plättvorrichtung nach einem der Ansprüche 1 bis 9, **dadurch gekennzeichnet, dass** die Erhebungen (55) symmetrisch zu einer Mittelsymmetrieebene auf dem Zylindermantel (53) ausgebildet sind.

11. Plättvorrichtung nach einem der Ansprüche 1 bis 10, **dadurch gekennzeichnet, dass** beidseitig einer vertikalen Mittelsymmetrieebene senkrecht zur Rotationsachse (59) der Klopftrommel (25') Erhebungsabschnitte (55') ausgebildet sind, die zumindest Abschnitte umfassen, die symmetrisch zu der vertikalen Mittelsymmetrieebene liegen.

12. Plättvorrichtung nach einem der Ansprüche 1 bis 11, **dadurch gekennzeichnet, dass** die Erhebungen (55) auf ihrer Erstreckung quer zur Umlaufrichtung der Klopftrommel (25') Abschnitte umfassen, die zum einen zur gegenüberliegenden Stirnseite der Klopftrommel (25') zunehmend stärker in Umlaufrichtung vorlaufend und dann wieder zunehmend stärker nachlaufend versetzt zueinander angeordnet sind.

13. Plättvorrichtung nach einem der Ansprüche 1 bis 12, **dadurch gekennzeichnet, dass** der Zylindermantel (53) als geschlossener Zylindermantel ausgebildet ist.

14. Plättvorrichtung nach einem der Ansprüche 1 bis 13, **dadurch gekennzeichnet, dass** der Zylindermantel (53) zumindest teilweise mit Ausnehmungen versehen ist, vorzugsweise zwischen den Erhebungen (55).

15. Plättvorrichtung nach Anspruch 14, **dadurch gekennzeichnet, dass** die Vertiefungen (57) durch Materialaussparungen oder Freiräume zwischen den Erhebungen (55) gebildet sind.

16. Plättvorrichtung nach einem der Ansprüche 1 bis 15, **dadurch gekennzeichnet, dass** die sich mit Querkomponente über den Zylindermantel (53) erstreckenden oder den Zylindermantel (53) zumindest abschnittsweise bildenden Erhebungen (55) in Umfangsrichtung gleichen Abstand aufweisen.

17. Plättvorrichtung nach einem der Ansprüche 1 bis 16, **dadurch gekennzeichnet, dass** die sich mit Querkomponente über den Zylindermantel (53) erstreckenden oder den Zylindermantel (53) zumindest abschnittsweise bildenden Erhebungen (55) in Umfangsrichtung einen zumindest abwechselnd kleineren und dann wieder größeren Abstand (65, 67) aufweisen.

18. Plättvorrichtung nach einem der Ansprüche 1 bis 17, **dadurch gekennzeichnet, dass** zumindest die Erhebungen (55) aus Kunststoff oder Metall bestehen, vorzugsweise aus unbeschichtetem Kunststoff oder Metall.

19. Plättvorrichtung nach einem der Ansprüche 1 bis 18, **dadurch gekennzeichnet, dass** der Zylindermantel (53) aus Kunststoff oder Metall besteht oder eine Kunststoff- oder Metallschicht, insbesondere Kunststoff- oder Metall-Grundschicht umfasst.

20. Plättvorrichtung nach einem der Ansprüche 1 bis 19, **dadurch gekennzeichnet, dass** der Zylindermantel (53) einschließlich der Erhebungen (55) und der Vertiefungen oder Materialaussparungen (57) insbesondere zwischen den Erhebungen (55) ausgebildet ist.

21. Plättvorrichtung nach einem der Ansprüche 1 bis 20, **dadurch gekennzeichnet, dass** der Zylindermantel (53) aus in Axialrichtung mehreren Scheiben besteht, die in Axialrichtung auf der Klopftrommel (25') zusammengebaut sind.

22. Plättvorrichtung nach einem der Ansprüche 1 bis 21, **dadurch gekennzeichnet, dass** die Erhebungen (55) als Einzelteile auf dem Zylindermantel (53) befestigt und angebracht sind.

## Claims

1. A flattening device for flattening foodstuffs, in particular pieces of meat, with the size of the surface being increased and the thickness being decreased at the same time, having the following features
- a conveying- and/or processing line is provided, over which the foodstuffs to be flattened are able to be brought to a flattening zone,
- a flattening device (25, 25', 25"), which cooperates with the foodstuffs to be flattened to cause the reduction in thickness, is arranged in the region of the flattening zone,
**characterised by** the following further features
- the flattening device (25, 25', 25") has a surface structure,
- the surface structure of the flattening device (25, 25', 25") has at least one or more elevations (55) arranged in rotation direction and offset in relation to one another, and at least one, preferably several respective depressions (57) adjacent to said elevations;
- the flattening device (25, 25', 25") acts on the foodstuffs to be treated in the flattening zone by means of said surface structure;
- the flattening device (25, 25'. 25") is driven at a speed and/or in a rotation direction in such a way that the casing speed or rotation speed of the at least one elevation (55) and/or the rotation direction deviates from the transport speed and/or the transport direction of the foodstuff to be thinned.

2. The flattening device according to Claim 1, **characterised in that** the flattening device (25, 25', 25") consists of a flattening- or beating drum (25'), that the flattening- or beating drum (25') has a surface structure deviating from the smooth cylinder surface, the surface structure of the cylinder casing (53) of the beating- or flattening drum (25') having an elevation (55) and depression (57) offset transversely thereto in the peripheral direction.

3. The flattening device according to Claim 1, **characterised in that** the flattening device (25, 25', 25") has a drive line (75), preferably a revolving drive line or a drive line (75) which is movable to and fro, on which at least one, preferably several elevations (55), lying offset in the peripheral direction, are provided with depressions or recesses (57) situated adjacent thereto or therebetween.

4. The flattening device according to any of Claims 1 to 3, **characterised in that** a support arrangement (77) is provided underneath the revolving drive line (75), or drive line (75) which is movable to and fro, on the side lying opposite the elevations, in order to avoid an evading movement of the elevation (55).

5. The flattening device according to any of Claims 1 to 4, **characterised in that** a beating arrangement (25" ') is provided, which preferably exerts timed beating movements towards the flattening zone for the foodstuff which is to be flattened, preferably at least indirectly onto the at least one elevation (55), in order to additionally apply pressure hereby onto the foodstuffs to be flattened.

6. The flattening device according to Claims 1 to 5, **characterised in that** the elevations (55) extend substantially with a component transversely to the rotation direction over the cylinder casing (53).

7. The flattening device according to Claim 1 or 6, **characterised in that** several elevations (55) are provided, lying offset in relation to one another in peripheral direction, which extend substantially transversely to the rotation direction onto the cylinder casing (53).

8. The flattening device according to any of Claims 1 to 7, **characterised in that** the elevations (55) extend in the manner of beads, ribs, walls or cross-pieces or substantially with a convex elevation in the form of a partial cylinder transversely to the direction of rotation of the beating drum (25').

9. The flattening device according to any of Claims 1 to 8, **characterised in that** the elevations (55), represented in cross-section, have at least approximately a trapezoidal shape perpendicularly to the rotation axis (59) of the beating drum, (25').

10. The flattening device according to any of Claims 1 to 9, **characterised in that** the elevations (55) are formed symmetrically to a central plane of symmetry on the cylinder casing (53).

11. The flattening device according to any of Claims 1 to 10, **characterised in that** elevation sections (55') are formed on both sides of a vertical central plane of symmetry perpendicularly to the rotation axis (59) of the beating drum (25'), said elevation sections (55') comprising at least sections which lie symmetrically to the vertical central plane of symmetry.

12. The flattening device according to any of Claims 1 to 11, **characterised in that** the elevations (55), on their extent transversely to the direction of rotation of the beating drum (25'), comprise sections which firstly with respect to the opposite end face of the beating drum (25') are arranged offset in relation to each other leading increasingly more in the direction of rotation and then following increasingly more again.

13. The flattening device according to any of Claims 1 to 12, **characterised in that** the cylinder casing (53) is formed as a closed cylinder casing.

14. The flattening device according to any of Claims 1 to 13, **characterised in that** the cylinder casing (53) is provided at least partially with recesses, preferably between the elevations (55).

15. The flattening device according to Claim 14, **characterised in that** the depressions (57) are formed by cutouts in the material or free spaces between the elevations (55).

16. The flattening device according to any of Claims 1 to 15, **characterised in that** the elevations (55), extending with transverse component over the cylinder casing (53) or at least partially forming the cylinder casing (53) have an equal distance in peripheral direction.

17. The flattening device according to any of Claims 1 to 16, **characterised in that** the elevations (55), extending with transverse component over the cylinder casing (53) or at least partially forming the cylinder casing (53) have in peripheral direction an at least alternating smaller and then greater distance (65, 67) again.

18. The flattening device according to any of Claims 1 to 17, **characterised in that** at least the elevations (55) consist of plastic or metal, preferably of uncoated plastic or metal.

19. The flattening device according to any of Claims 1 to 18, **characterised in that** the cylinder casing (53) consists of plastic or metal or a plastic- or metal layer, particularly a plastic- or metal base layer.

20. The flattening device according to any of Claims 1 to 19, **characterised in that** the cylinder casing (53), including the elevations (55) and the depressions or cutouts (57) in the material, is formed in particular between the elevations (55).

21. The flattening device according to any of Claims 1 to 20, **characterised in that** the cylinder casing (53) consists of several plates in axial direction, which are assembled in axial direction on the beating drum (25').

22. The flattening device according to any of Claims 1 to 21, **characterised in that** the elevations (55) are fastened and mounted as individual parts on the cylinder casing (53).

## Revendications

1. Dispositif pour aplatir des aliments, notamment des pièces de viande, en agrandissant leur surface, tout en réduisant leur épaisseur, avec les attributs suivants :
- il est prévu un tronçon de transport et/ ou de traitement, par l'intermédiaire duquel les aliments à aplatir sont susceptibles d'être alimentés vers une zone d'aplatissage,
- dans la région de la zone d'aplatissage est disposé un dispositif d'aplatissage (25, 25', 25") qui coopère avec les aliments à aplatir, pour provoquer la diminution d'épaisseur,
**caractérisé par** les attributs supplémentaires suivants
- le dispositif d'aplatissage (25, 25', 25") comporte une structure superficielle,
- la structure superficielle du dispositif d'aplatissage (25, 25', 25") comporte en direction de rotation, au moins une ou plusieurs élévations (55) placées de façon décalée les unes par rapport aux autres et à côté, chaque fois une cavité (57), de préférence, plusieurs cavités (57),
- dans la zone d'aplatissage, le dispositif d'aplatissage (25, 25', 25") agit avec sa structure superficielle sur les aliments à traiter,
- le dispositif d'aplatissage (25, 25', 25") est entraîné à une vitesse et/ou dans un sens de rotation, de sorte que la vitesse de l'enveloppe ou vitesse de rotation de la au moins une élévation (55) et/ou le sens de rotation soit différent de la vitesse de transport et/ou du sens de transport de l'aliment qui doit être aminci.

2. Dispositif d'aplatissage selon la revendication 1, **caractérisé en ce que** le dispositif d'aplatissage (25, 25', 25") consiste dans un tambour d'aplatissage ou de tassement (25'), **en ce que** le tambour d'aplatissage ou de tassement (25') présente une structure superficielle différente de la surface lisse du cylindre, la structure superficielle de l'enveloppe du cylindre (53) du tambour de tassement ou d'aplatissage (25') comportant une élévation (55) ou une cavité (57) située en déport transversal par rapport à cette dernière dans le sens périphérique.

3. Dispositif d'aplatissage selon la revendication 1, **caractérisé en ce que** le dispositif d'aplatissage (25, 25', 25") comporte une chaîne cinématique (75), de préférence une chaîne cinématique périphérique, ou une chaîne cinématique (75) à déplacement aller et retour, sur laquelle est prévue une, de préférence sont prévues plusieurs élévations (55) situées en déport dans le sens périphérique, avec des cavités ou des évidements (57) placés à côté ou dans l'intermédiaire.

4. Dispositif d'aplatissage selon l'une quelconque des revendications 1 à 3, **caractérisé en ce que** sous la chaîne cinématique (75) périphérique ou susceptible de se déplacer en aller et retour, sur la face opposée aux élévations est prévu un dispositif d'appui (77), pour empêcher un mouvement d'évitement de l'élévation (55).

5. Dispositif d'aplatissage selon l'une quelconque des revendications 1 à 4, **caractérisé en ce qu'**un dispositif de tassement (25 "') exerçant de préférence des mouvements de tassement rythmés en direction de la zone d'aplatissage pour l'aliment à aplatir, de préférence indirectement sur la au moins une élévation (55) est prévu, pour soumettre en supplément par cet intermédiaire les aliments à aplatir à une pression.

6. Dispositif d'aplatissage selon la revendication 1 à 5, **caractérisé en ce que** les élévations (55) s'étendent sensiblement avec un composant à la transversale du sens de rotation, par l'intermédiaire de l'enveloppe du cylindre (53).

7. Dispositif d'aplatissage selon la revendication 1 ou 6, **caractérisé en ce que** dans le sens périphérique, sont prévues plusieurs élévations (55) situées en déport les unes par rapport aux autres, qui s'étendent sensiblement à la transversale du sens de rotation, sur l'enveloppe du cylindre (53).

8. Dispositif d'aplatissage selon l'une quelconque des revendications 1 à 7, **caractérisé en ce que** les élévations (55) s'étendent à la manière d'un bourrelet, de nervures, de levées ou de listels ou sensiblement avec une élévation convexe en forme de cylindre partiel à la transversale du sens de rotation de tambour de tassement (25').

9. Dispositif d'aplatissage selon l'une quelconque des revendications 1 à 8, **caractérisé en ce que**, en représentation en coupe transversale, les élévations (55) se rapprochent au moins d'une forme trapézoïdale à la perpendiculaire de l'axe de rotation (59) du tambour de tassement (25').

10. Dispositif d'aplatissage selon l'une quelconque des revendications 1 à 9, **caractérisé en ce que** les élévations (55) sont conçues sur l'enveloppe cylindrique (53), de façon symétrique à un plan de symétrie médian.

11. Dispositif d'aplatissage selon l'une quelconque des revendications 1 à 10, **caractérisé en ce que** sur les deux côtés d'un plan de symétrie vertical, à la perpendiculaire de l'axe de rotation (59) du tambour de tassement (25'), sont formées des sections d'élévation (55'), comprenant au moins des sections qui se situent de façon symétrique au plan de symétrie médian vertical.

12. Dispositif d'aplatissage selon l'une quelconque des revendications 1 à 11, **caractérisé en ce que** les élévations (55) comportent sur leur extension, à la transversale du sens périphérique du tambour de tassement (25') des sections, qui sont disposés en étant mutuellement déportées d'une part par rapport à la face frontale opposée du tambour de tassement (25') avec une avance croissante, puis de nouveau avec un recul croissant, dans le sens de rotation.

13. Dispositif d'aplatissage selon l'une quelconque des revendications 1 à 12, **caractérisé en ce que** l'enveloppe cylindrique (53) est conçue sous la forme d'une enveloppe cylindrique fermée.

14. Dispositif d'aplatissage selon l'une quelconque des revendications 1 à 13, **caractérisé en ce que** l'enveloppe cylindrique (53) est munie au moins partiellement d'évidements, de préférence entre les élévations (55).

15. Dispositif d'aplatissage selon la revendication 14, **caractérisé en ce que** les cavités (57) sont formées par des creux dans la matière ou par des interstices entre les élévations (55).

16. Dispositif d'aplatissage selon l'une quelconque des revendications 1 à 15, **caractérisé en ce que** les élévations (55) s'étendant avec des composants transversaux sur l'enveloppe cylindrique (53) ou formant au moins partiellement le manteau cylindrique (53) présentent le même écart dans le sens périphérique.

17. Dispositif d'aplatissage selon l'une quelconque des revendications 1 à 16, **caractérisé en ce que** les élévations (55) s'étendant avec des composants transversaux sur l'enveloppe cylindrique (53) ou formant au moins partiellement le manteau cylindrique (53) présentent dans le sens périphérique un écart (65, 67) au moins alternativement plus petit et ensuite de nouveau plus grand.

18. Dispositif d'aplatissage selon l'une quelconque des revendications 1 à 17, **caractérisé en ce que** au moins les élévations (55) sont en matière plastique ou en métal, de préférence en matière plastique ou en métal non revêtus.

19. Dispositif d'aplatissage selon l'une quelconque des revendications 1 à 18, **caractérisé en ce que** l'enveloppe cylindrique (53) est en matière plastique ou en métal, ou comprend une couche en matière plastique ou en métal, notamment une couche de fond.

20. Dispositif d'aplatissage selon l'une quelconque des revendications 1 à 19, **caractérisé en ce que** l'enveloppe cylindrique (53) y compris les élévations (55) et les creux ou évidements de matière (57) est formé notamment entre les élévations (55).

21. Dispositif d'aplatissage selon l'une quelconque des revendications 1 à 20, **caractérisé en ce que** l'enveloppe cylindrique (53) consiste dans la direction axiale en plusieurs disques, qui en direction axiale sont assemblés sur le tambour de tassement (25').

22. Dispositif d'aplatissage selon l'une quelconque des revendications 1 à 21, **caractérisé en ce que** les élévations (55) sont fixées et montées en tant que pièces détachées sur l'enveloppe cylindrique (53).
